# EUROPÄISCHE PATENTSCHRIFT

(11) **EP 2 661 784 B1**
(45) Veröffentlichungstag und Bekanntmachung des Hinweises auf die Patenterteilung: **07.06.2017**
(21) Anmeldenummer: 11827776.3
(22) Anmeldetag: 10.11.2011
(51) Int. Cl.: H01M 10/0525, F28D 1/00, F28F 21/00, H01M 2/02, H01M 10/48, H01M 10/653, H01M 10/6556, H01M 10/6554, H01M 10/617, H01M 10/613

(54) **TEMPERIERUNG VON GALVANISCHEN ZELLEN MITTELS WÄRMELEITENDEN KUNSTSTOFFCOM-POUNDS**
CONTROLLING THE TEMPERATURE OF GALVANIC CELLS BY MEANS OF HEAT-CONDUCTING PLASTICS COMPOUNDS
THERMORÉGULATION D'ÉLÉMENTS GALVANIQUES AU MOYEN DE COMPOSITIONS PLASTIQUES THERMOCONDUCTRICES

(30) Priorität: 04.01.2011 DE 102011002415
(43) Veröffentlichungstag der Anmeldung: 13.11.2013
(73) Patentinhaber: Robert Bosch GmbH, 70442 Stuttgart (DE)
(72) Erfinder: RAISCH, Sven Robert, 70565 Stuttgart (DE); SCHMIEDERER, Dirk, 70806 Kornwestheim (DE)
(86) Internationale Anmeldenummer: PCT/EP2011/069804
(87) Internationale Veröffentlichungsnummer: WO 2012/092993

(56) Entgegenhaltungen:
- WO-A1-2010/039089
- WO-A1-2010/115560
- JP-A- 2010 040 420
- US-A1- 2009 253 026

## Beschreibung

Die vorliegende Erfindung betrifft eine Anordung, umfassend eine Temperierplatte, und ein Kunststoffgehäuse für eine galvanische Zelle sowie eine entsprechende Batterieanordnung.

### Stand der Technik

Lithium-Ionen-Zellen weisen herkömmlicherweise eine metallische Hülle, beispielsweise aus Aluminium auf. Üblicherweise werden mehrere, beispielsweise sechs bis acht, dieser Zellen zu einem Batteriemodul verbaut, wobei wiederum mehrere, beispielsweise drei oder mehr, dieser Batteriemodule zu einem Batteriepack verbaut werden können.

Zum Zweck der Temperierung werden die Batteriemodule beziehungsweise Batteriepacks meist auf einer metallischen Kühlplatte montiert. Um einen Kurzschluss zwischen den Zellen und der metallischen Kühlplatte zu vermeiden, wird dabei zwischen den Zellen und der metallischen Platte ein elektrischer Isolator angebracht. Zur Überwachung des Lade- und Betriebszustandes wird dabei herkömmlicherweise jede einzelne Zelle einzeln mit einer Zellüberwachungseinrichtung verkabelt.

Ein Gegenstand der vorliegenden Erfindung ist eine Anordnung nach Anspruch 1, umfassend eine Temperierplatte und eine oder mehrere galvanische Zellen, insbesondere Lithium-Zellen, beispielsweise Lithium-Ionen-Zellen, zum Beispiel mit oder gegebenenfalls ohne metallische Zellhülle, welche mindestens einen Temperiermittelkanal zum Führen eines Temperiermittels durch die Temperierplatte umfasst. Derartige Temperierplatten können auch als Kühlplatten bezeichnet werden.

Erfindungsgemäß ist mindestens ein Abschnitt der Temperierplatte, welcher zur Wärmeableitung vorgesehen ist und den mindestens einen Temperiermittelkanal zumindest teilweise begrenzt, aus einem Kunststoffcompound ausgebildet, welcher mindestens ein Additiv zur Erhöhung der Wärmeleitfähigkeit umfasst.

Unter einem Kunststoffcompound kann im Sinn der vorliegenden Erfindung insbesondere ein Verbundstoff verstanden werden, welcher neben einem oder mehreren Grundpolymeren mindestens ein Additiv zur Modifizierung der Grundpolymereigenschaften umfasst.

Unter einem Additiv zur Erhöhung der Wärmeleitfähigkeit kann im Sinn der vorliegenden Erfindung insbesondere ein Additiv verstanden werden, welches die spezifische Wärmeleitfähigkeit des Kunststoffcompounds, bezogen auf die spezifische Wärmeleitfähigkeit des Kunststoffcompounds ohne das wärmeleitfähigkeitserhöhende Additiv, erhöht.

Durch die erfindungsgemäße Temperierplatte kann vorteilhafterweise erreicht werden, dass die, beispielsweise beim Laden entstehende, Wärme nicht mehr erst von der Zellhülle in den elektrischen Isolator und von dort wiederum an eine Kühlplatte übertragen werden muss, sondern, dass die Wärmeübertragung stattdessen von der Zellhülle oder sogar der Zelle selbst über das wärmeleitende Kunststoffcompound direkt an das Temperier- beziehungsweise Kühlmittel erfolgen kann. So kann vorteilhafterweise der Widerstand des Wärmeleitpfads deutlich gesenkt und das Gewicht reduziert werden.

Grundsätzlich kann es sich bei dem Temperiermittel um ein flüssiges, gasförmiges oder festes Temperiermittel handeln. Insbesondere kann das Temperiermittel ein flüssiges oder gasförmiges Temperiermittel sein.

Im Rahmen einer erfindungsgemäßen Ausführungsform der Temperierplatte ist der mindestens eine Temperiermittelkanal durch mindestens einen weiteren Abschnitt der Temperierplatte teilweise begrenzt, welcher aus einem oder mehreren anderen Materialien, beispielsweise einem oder mehreren Kunststoffen, Kunststoffcompounds und/oder Kunststoff-Metall-Verbundwerkstoffen, ausgebildet ist. So kann die Temperierplatte vorteilhafterweise mit weiteren, später erläuterten Funktionen ausgestattet und die Kosten und das Gewicht der mit der Temperierungsplatte auszustattenden Batterie insgesamt optimiert, insbesondere verringert, werden. Erfindungsgemäß umfasst der mindestens eine weitere Abschnitt der Temperierplatte nur Kunststoffe, Kunststoffcompounds beziehungsweise Kunststoff-Metall-Verbundwerkstoffe, welcher kein Additiv zur Erhöhung der Wärmeleitfähigkeit umfassen. Insbesondere kann der mindestens eine weitere Abschnitt der Temperierplatte aus einem Material Kunststoff beziehungsweise Kunststoffcompound ausgebildet, welcher kein Additiv zur Erhöhung der Wärmeleitfähigkeit umfasst. So können vorteilhafterweise das Gewicht und die Kosten insbesondere optimiert, insbesondere verringert, werden.

Im Rahmen einer weiteren Ausführungsform der Temperierplatte ist der mindestens eine Temperiermittelkanal durch zwei zusammengesetzte Halbschalen ausgebildet. Hierbei können sowohl beide Halbschalen eine Struktur zur gemeinsamen oder voneinander getrennten Temperiermittelkanalausbildung aufweisen als auch nur eine der beiden Halbschalen eine Struktur zur Temperiermittelkanalausbildung aufweisen, wobei die andere Halbschale keine derartige Struktur aufweist. So kann vorteilhafterweise die Herstellung der erfindungsgemäßen Temperierplatte vereinfacht werden. Vorzugsweise weist dabei die eine Halbschale einen Kunststoffcompound auf, welcher mindestens ein Additiv zur Erhöhung der Wärmeleitfähigkeit umfasst. Dabei kann die andere Halbschale insbesondere kein Additiv zur Erhöhung der Wärmeleitfähigkeit umfassen.

Die beiden Halbschalen können dabei eine unterschiedliche Größe, einen unterschiedlichen Aufbau und ein unterschiedliches Gewicht aufweisen. Der Begriff "Halbschale" soll daher nicht dahingehend verstanden werden, dass es sich bei den beiden Halbschalen um jeweils die genaue Hälfte eines Ganzen handelt.

Im Rahmen einer weiteren Ausführungsform der Temperierplatte ist die Temperierplatte zur Temperierung von zwei oder mehr galvanischen Zellen, insbesondere den galvanischen Zellen (eines Batteriemoduls, beispielsweise von ≥ 4 bis ≤ 12, zum Beispiel von ≥ 6 bis ≤ 8, galvanischen Zellen, ausgelegt. Dies hat den Vorteil, dass die einzelnen Batteriemodule individuell zusammengestellt und an den zur Verfügung stehenden Raum angepasst angeordnet werden können, was beim Einsatz von einer gemeinsamen Kühlplatte für ein ganzes Batteriepack aus mehreren Batteriemodulen nicht möglicht ist.

Vorzugsweise ist der mindestens eine zur Wärmeableitung vorgesehene, temperierkanalbegrenzende Abschnitt aus einem Kunststoffcompound ausgebildet, welcher, gemessen bei 20 °C Umgebungstemperatur und 50 % Luftfeuchte, eine spezifische Wärmeleitfähigkeit λ, von größer oder gleich 0,5 W / (m·K), insbesondere von größer oder gleich 0,7 W / (m·K), beispielsweise von größer oder gleich 1 W / (m·K), und einen spezifischen elektrischen Widerstand p von größer oder gleich 1·10⁻⁵ Ω·m, insbesondere von größer oder gleich 1·10⁻¹ Ω·m, beispielsweise von größer oder gleich 1·10⁴ Ω·m, aufweist.

Vorzugsweise weist das Additiv zur Erhöhung der Wärmeleitfähigkeit, gemessen bei 20 °C Umgebungstemperatur und 50 % Luftfeuchte, eine spezifische Wärmeleitfähigkeit λ, von größer oder gleich 10 W / (m·K), insbesondere von größer oder gleich 20 W / (m·K), beispielsweise von größer oder gleich 50 W / (m·K), und/oder einen spezifischen elektrischen Widerstand p von größer oder gleich 1·10⁻⁵ Ω·m, insbesondere von größer oder gleich 1·10⁻¹ Ω·m, beispielsweise von größer oder gleich 1·10⁴ Ω·m, auf.

Beispielsweise kann das Additiv zur Erhöhung der Wärmeleitfähigkeit ein keramisches Material sein. Zum Beispiel kann das Additiv zur Erhöhung der Wärmeleitfähigkeit Bornitrid, Aluminiumoxid, Aluminiumhydroxid, Magnesiumhydroxid oder eine Kombination davon sein.

Im Rahmen einer weiteren Ausführungsform der Temperierplatte ist die Temperierplatte durch ein Spritzgussverfahren und/oder ein Extrusionsverfahren und/oder ein Tiefziehverfahren hergestellt. Durch die hohe Geometriefreiheit bei diesen Kunststoffverarbeitungen können die Temperiermittelkanäle, elektrische Leitungen, elektrische Zellüberwachungen und elektrische Kontaktierungsstellen vorteilhafterweise ebenfalls in die Temperierplatte integriert werden und deren Ausbildung in den Spritzgieß-, Extrusions- beziehungsweise Tiefziehzyklus integriert werden, so dass eine Verkürzung der Prozesskette erzielt werden kann.

Grundsätzlich kann die elektrische Kontaktierung der Zellen gemäß dem Stand der Technik durch Verkabelung beziehungsweise nachträglich montierte metallische Leitungen erfolgen.

Die Temperierplatte kann allerdings auch eine oder mehrere elektrische Leitungen umfassen. Diese können insbesondere in die Temperierplatte integriert sein. Zum Beispiel können die elektrischen Leitungen mittels MID-Technik, beispielsweise durch ein Metallisierungsverfahren, ausgebildet sein.

Das Einbinden der elektrischen Kontaktierung in die Temperierplatte hat den Vorteil, dass auf eine fertigungstechnisch aufwendige Verkabelung der einzelnen Zellen in einem Modul oder Pack beziehungsweise mit einer Zellüberwachungseinrichtung beziehungsweise zur Kontaktierung der Zellen verzichtet und stattdessen die elektrische Kontaktierung vorteilhafterweise in einer Großserienfertigung umgesetzt werden kann. So kann insgesamt die Prozesskette verkürzt und die Fertigungskosten gesenkt werden. Zudem kann hierdurch der insgesamt für die herzustellende Batterieanordnung benötigte Bauraum sowie deren Gewicht optimiert, insbesondere verringert, werden.

Im Rahmen einer weiteren Ausführungsform der Temperierplatte umfasst die Temperierplatte mindestens eine elektrische Leitung, insbesondere in Form eines zur elektrischen Leitung vorgesehenen Temperierplattenabschnitts, welche aus einem elektrisch selbstleitenden Polymer oder Polymergemisch und/oder einem mindestens ein Additiv zur Erhöhung der elektrischen Leitfähigkeit umfassenden Kunststoffcompound und/oder einem metallhaltigen Material ausgebildet ist.

Das elektrisch selbstleitende Polymer oder Polymergemisch kann zum Beispiel Polyacetylen, Polyanilin, Polyparaphenylen, Polypyrrol und/oder Polythiophen umfassen. Das Additiv zur Erhöhung der elektrischen Leitfähigkeit kann zum Beispiel Graphit, Ruß, Aluminium, Kupfer, Silber oder eine Kombination davon sein.

Das metallhaltige Material kann zum Beispiel Aluminium, Kupfer, Silber, Zink, Zinn oder eine Kombination umfassen.

Im Rahmen einer weiteren Ausführungsform der Temperierplatte ist die mindestens eine elektrische Leitung durch Einspritzen des elektrisch selbstleitenden Polymers oder Polymergemischs und/oder des Kunststoffcompounds, welcher mindestens ein Additiv zur Erhöhung der elektrischen Leitfähigkeit umfasst, und/oder des metallhaltigen Materials in ein anderes Material oder mehrere andere Materialien der Temperierplatte ausgebildet.

Dies stellt eine Möglichkeit dar elektrische Leitungen auf besonders einfache Weise in der Temperierplatte zu realisieren beziehungsweise zu integrieren.

Die mindestens eine elektrische Leitung kann jedoch auch anders realisiert sein.

Im Rahmen einer weiteren Ausführungsform der Temperierplatte umfasst die Temperierplatte mindestens eine elektrische Leitung, welche durch Umspritzen eines metallischen Leitungselementes, beispielsweise eines Drahtes oder Gitters, mit einem anderen Material oder mehreren anderen Materialien der Temperierplatte ausgebildet ist.

Dies stellt eine weitere Möglichkeit dar elektrische Leitungen auf besonders einfache Weise in dem Kunststoffgehäuse zu realisieren beziehungsweise zu integrieren.

Im Rahmen einer weiteren Ausführungsform der Temperierplatte umfasst die Temperierplatte mindestens eine elektrische Zellüberwachungseinrichtung zur Überwachung des Lade- und/oder Betriebszustandes von einer oder mehreren galvanischen Zellen. Die mindestens eine elektrische Zellüberwachungseinrichtung kann insbesondere in die Temperierplatte integriert sein. Insbesondere kann die Zellüberwachungseinrichtung elektrische Leitungen umfassen, welche wie zuvor beschrieben ausgebildet sind. Beispielsweise kann die mindestens eine Zellüberwachungseinrichtung zumindest teilweise mittels MID-Technik, beispielsweise unter Verwendung eines Metallisierungsverfahrens, ausgebildet sein. Das Einbinden von Zellüberwachungseinrichtungen hat ebenfalls die im Zusammenhang mit den elektrischen Leitungen erläuterten Vorteile.

Im Rahmen einer weiteren Ausführungsform der Temperierplatte umfasst die Temperierplatte mindestens zwei elektrische Kontaktierungseinrichtungen zur elektrischen Kontaktierung von einer oder mehreren galvanischen Zellen. Die Kontaktierungseinrichtungen können in die Temperierplatte teilweise integriert sein. Insbesondere können die Kontaktierungseinrichtungen elektrische Leitungen umfassen, welche wie zuvor beschrieben ausgebildet sind. Beispielsweise können die Kontaktierungseinrichtungen zumindest teilweise mittels MID-Technik, beispielsweise unter Verwendung eines Metallisierungsverfahrens, ausgebildet sein. Das Einbinden von Kontaktierungseinrichtungen hat ebenfalls die im Zusammenhang mit den elektrischen Leitungen erläuterten Vorteile.

Weiterhin kann die Temperierplatte mindestens einen Temperiermitteleinleitungsanschluss zum Einleiten eines flüssigen oder gasförmigen Temperiermittels in den oder die Temperiermittelkanäle und mindestens einen Temperiermittelableitungsanschluss zum Ableiten des flüssigen oder gasförmigen Temperiermittels aus dem oder den Temperiermittelkanälen umfassen.

Hinsichtlich weiterer Vorteile und Merkmale der erfindungsgemäßen Temperierplatte wird hiermit explizit auf die Erläuterungen im Zusammenhang mit einem Kunststoffgehäuse, einer Batterieanordnung und der Figurenbeschreibung verwiesen.

Möglich ist ein Kunststoffgehäuse für eine oder mehrere galvanische Zelle, insbesondere Lithium-Zellen, beispielsweise Lithium-Ionen-Zellen, zum Beispiel mit oder gegebenenfalls ohne metallische Zellhülle.

Erfindungsgemäß ist zumindest ein zur Wärmeableitung vorgesehener Abschnitt des Kunststoffgehäuses aus einem Kunststoffcompound ausgebildet, welcher mindestens ein Additiv zur Erhöhung der Wärmeleitfähigkeit umfasst.

Das Kunststoffgehäuse hat den Vorteil, dass die, beispielsweise beim Laden entstehende, Wärme nicht mehr erst von der Zellhülle in den elektrischen Isolator und von dort wiederum an eine Kühlplatte übertragen werden muss, sondern, dass die Wärmeübertragung stattdessen von der Zellhülle oder sogar der Zelle selbst über das wärmeleitende Kunststoffcompound, gegebenenfalls direkt, an das Temperier- beziehungsweise Kühlmittel erfolgen kann. So kann vorteilhafterweise der Widerstand des Wärmeleitpfads deutlich gesenkt und das Gewicht reduziert werden.

Grundsätzlich ist es möglich, dass der mindestens eine zur Wärmeableitung vorgesehene Abschnitt der zur Montage an einer herkömmlichen Kühlplatte vorgesehene Bereich des Kunststoffgehäuses ist.

Im Rahmen einer bevorzugten Ausführungsform des Kunststoffgehäuses ist jedoch der mindestens eine zur Wärmeableitung vorgesehene Abschnitt zur Ableitung von Wärme aus der Zelle vorgesehen und begrenzt mindestens einen Temperiermittelkanal zum Führen eines, insbesondere flüssigen und/oder gasförmigen, Temperiermittels durch das Kunststoffgehäuse zumindest teilweise. Erfindungsgemäß ist der mindestens eine zur Wärmeableitung vorgesehene Abschnitt Teil eines, insbesondere plattenförmigen, Deckels des Kunststoffgehäuses. Dies hat den Vorteil, dass eine gute Temperierwirkung mit geringen Materialkosten und Gewicht durch den wärmeleitenden Kunststoffcompound erzielt werden kann.

Unter einem Deckel kann im Rahmen der vorliegenden Erfindung insbesondere ein Gehäusebauteil verstanden werden, welches dazu ausgelegt ist ein oder mehr andere Gehäusebauteile unter Ausbildung eines geschlossenen Gehäuses zu verschließen. Der Begriff Deckel, soll dabei nicht einschränkend hinsichtlich der Ausrichtung des als Deckel bezeichneten Gehäusebauteils bezüglich der Gravitationsrichtung verstanden werden. So kann unter einem Deckel sowohl ein Gehäusebauteil verstanden werden, welches dazu ausgelegt ist ein oder mehr andere Gehäusebauteile unter Ausbildung eines geschlossenen Gehäuses oben als auch seitlich oder unten zu verschließen. Erfindungsgemäß ist die Temperierplatte nach einem der Ansprüche 1-8 der plattenförmige Deckel des Kunststoffgehäuses. Der mindestens eine zur Wärmeableitung vorgesehene und/oder mindestens einen Temperiermittelkanal begrenzende Abschnitt und/oder mindestens ein weiterer zur Wärmeleitung vorgesehener und/oder mindestens einen Temperiermittelkanal begrenzender Abschnitt kann jedoch auch - alternativ oder zusätzlich - in das Kunststoffgehäuse, insbesondere in den Grundkörper des Kunststoffgehäuses, integriert sein.

Im Rahmen einer weiteren Ausführungsform des Kunststoffgehäuses ist das Kunststoffgehäuse zur Aufnahme von zwei oder mehr galvanischen Zellen, insbesondere von den galvanischen Zellen eines Batteriemoduls, beispielsweise von ≥ 4 bis ≤ 12, zum Beispiel von ≥ 6 bis ≤ 8, galvanischen Zellen, ausgelegt. Dies hat den Vorteil, dass die einzelnen Batteriemodule individuell zusammengestellt und an den zur Verfügung stehenden Raum angepasst angeordnet werden können, was beim Einsatz von einer gemeinsamen Kühlplatte für ein ganzes Batteriepack aus mehreren Batteriemodulen nicht möglicht ist.

Vorzugsweise ist der mindestens eine zur Wärmeableitung vorgesehene Abschnitt aus einem Kunststoffcompound ausgebildet, welcher, gemessen bei 20 °C Umgebungstemperatur und 50 % Luftfeuchte, eine spezifische Wärmeleitfähigkeit λ, von größer oder gleich 0,5 W / (m·K), insbesondere von größer oder gleich 0,7 W / (m·K), beispielsweise von größer oder gleich 1 W / (m·K), und einen spezifischen elektrischen Widerstand p von größer oder gleich 1·10⁻⁵ Ω·m, insbesondere von größer oder gleich 1·10⁻¹ Ω·m, beispielsweise von größer oder gleich 1·10⁴ Ω·m, aufweist.

Das Additiv zur Erhöhung der Wärmeleitfähigkeit kann insbesondere, gemessen bei 20 °C Umgebungstemperatur und 50 % Luftfeuchte, eine spezifische Wärmeleitfähigkeit λ, von größer oder gleich 10 W / (m·K), insbesondere von größer oder gleich 20 W / (m·K), beispielsweise von größer oder gleich 50 W / (m·K), und/oder einen spezifischen elektrischen Widerstand p von größer oder gleich 1·10⁻⁵ Ω·m, insbesondere von größer oder gleich 1·10⁻¹ Ω·m, beispielsweise von größer oder gleich 1·10⁴ Ω·m, aufweisen.

Beispielsweise kann das Additiv zur Erhöhung der Wärmeleitfähigkeit ein keramisches Material sein. Zum Beispiel kann das Additiv zur Erhöhung der Wärmeleitfähigkeit Bornitrid, Aluminiumoxid, Aluminiumhydroxid, Magnesiumhydroxid oder eine Kombination davon sein.

Im Rahmen einer weiteren Ausführungsform des Kunststoffgehäuses ist das Kunststoffgehäuse durch ein Spritzgussverfahren und/oder ein Extrusionsverfahren und/oder ein Tiefziehverfahren hergestellt. Durch die hohe Geometriefreiheit bei diesen Kunststoffverarbeitungen können die Temperiermittelkanäle, elektrische Leitungen, elektrische Zellüberwachungen und elektrische Kontaktierungsstellen vorteilhafterweise ebenfalls in das Kunststoffgehäuse integriert werden und deren Ausbildung in den Spritzgieß-, Extrusions- beziehungsweise Tiefziehzyklus integriert werden, so dass eine Verkürzung der Prozesskette erzielt werden kann. Auch können mehrere unterschiedliche Gehäuseelemente auf einfache Weise einteilig, zweiteilig oder gegebenenfalls mehrteilig hergestellt werden. Insofern das Kunststoffgehäuse zwei oder mehr Gehäuseteile, beispielsweise einen Gehäusegrundkörper und einen Gehäusedeckel, umfasst, können diese beispielsweise durch Schweißen, Kleben oder mechanische Verfahren, wie Schrauben, Klipsen, etc., verbunden werden. Im Fall des Spritzgießens können die galvanischen Zellen sowohl direkt mir dem Kunststoffgehäuse umspritzt werden als auch nachträglich in das Kunststoffgehäuse eingesteckt werden.

Grundsätzlich kann die elektrische Kontaktierung der Zellen jedoch auch gemäß dem Stand der Technik durch Verkabelung beziehungsweise nachträglich montierte metallische Leitungen erfolgen.

Vorzugsweise umfasst das Kunststoffgehäuse allerdings mindestens eine elektrische Leitung. Die mindestens eine elektrische Leitung ist dabei vorzugsweise in das Kunststoffgehäuse integriert. Zum Beispiel kann die mindestens eine elektrische Leitung mittels MID-Technik, beispielsweise durch ein Metallisierungsverfahren, ausgebildet sein.

Das Einbinden der elektrischen Kontaktierung in das Kunststoffgehäuse hat den Vorteil, dass auf eine fertigungstechnisch aufwendige Verkabelung der einzelnen Zellen in einem Modul oder Pack beziehungsweise mit einer Zellüberwachungseinrichtung beziehungsweise zur Kontaktierung der Zellen von außerhalb des Gehäuses verzichtet und stattdessen die elektrische Kontaktierung vorteilhafterweise in einer Großserienfertigung umgesetzt werden kann. So kann insgesamt die Prozesskette verkürzt und die Fertigungskosten gesenkt werden. Zudem kann hierdurch der insgesamt für die herzustellende Batterieanordnung benötigte Bauraum sowie deren Gewicht optimiert, insbesondere verringert, werden.

Im Rahmen einer weiteren Ausführungsform des Kunststoffgehäuses umfasst das Kunststoffgehäuse mindestens eine elektrische Leitung, insbesondere in Form eines zur elektrischen Leitung vorgesehenen Gehäuseabschnitts, welche aus einem elektrisch selbstleitenden Polymer oder Polymergemisch und/oder einem mindestens ein Additiv zur Erhöhung der elektrischen Leitfähigkeit umfassenden Kunststoffcompound und/oder einem metallhaltigen Material ausgebildet ist.

Das elektrisch selbstleitende Polymer oder Polymergemisch kann zum Beispiel Polyacetylen, Polyanilin, Polyparaphenylen, Polypyrrol und/oder Polythiophen umfassen. Das Additiv zur Erhöhung der elektrischen Leitfähigkeit kann zum Beispiel Graphit, Ruß, Aluminium, Kupfer, Silber oder eine Kombination davon sein. Das metallhaltige Material kann zum Beispiel Aluminium, Kupfer, Silber, Zink, Zinn oder eine Kombination umfassen.

Im Rahmen einer weiteren Ausführungsform des Kunststoffgehäuses ist die mindestens eine elektrische Leitung durch Einspritzen des elektrisch selbstleitenden Polymers oder Polymergemischs und/oder des Kunststoffcompounds, welcher mindestens ein Additiv zur Erhöhung der elektrischen Leitfähigkeit umfasst, und/oder des metallhaltigen Materials in ein anderes Material oder mehrere andere Materialien des Kunststoffgehäuses ausgebildet.

Dies stellt eine Möglichkeit dar elektrische Leitungen auf besonders einfache Weise in dem Kunststoffgehäuse zu realisieren beziehungsweise zu integrieren.

Die mindestens eine elektrische Leitung kann jedoch auch anders realisiert sein.

Im Rahmen einer weiteren Ausführungsform umfasst das Kunststoffgehäuse beispielsweise mindestens eine elektrische Leitung, welche durch Umspritzen eines metallischen Leitungselementes, beispielsweise eines Drahtes oder Gitters, mit einem anderen Material oder mehreren anderen Materialien des Kunststoffgehäuses ausgebildet ist.

Dies stellt eine weitere Möglichkeit dar elektrische Leitungen auf besonders einfache Weise in dem Kunststoffgehäuse zu realisieren beziehungsweise zu integrieren.

Im Rahmen einer weiteren Ausführungsform des Kunststoffgehäuses umfasst das Kunststoffgehäuse mindestens eine elektrische Zellüberwachungseinrichtung zur Überwachung des Lade- und/oder Betriebszustandes von einer oder mehreren galvanischen Zellen. Die mindestens eine elektrische Zellüberwachungseinrichtung kann insbesondere in das Kunststoffgehäuse integriert sein. Insbesondere kann die Zellüberwachungseinrichtung elektrische Leitungen umfassen, welche wie zuvor beschrieben ausgebildet sind. Beispielsweise kann die mindestens eine Zellüberwachungseinrichtung zumindest teilweise mittels MID-Technik, beispielsweise unter Verwendung eines Metallisierungsverfahrens, ausgebildet sein. Das Einbinden von Zellüberwachungseinrichtungen hat ebenfalls die im Zusammenhang mit den elektrischen Leitungen erläuterten Vorteile.

Im Rahmen einer weiteren Ausführungsform des Kunststoffgehäuses umfasst das Kunststoffgehäuse mindestens zwei elektrische Kontaktierungseinrichtungen zur elektrischen Kontaktierung von einer oder mehreren in dem Kunststoffgehäuse angeordneten galvanischen Zellen. Die Kontaktierungseinrichtungen können in das Kunststoffgehäuse teilweise integriert sein. Insbesondere können die Kontaktierungseinrichtungen elektrische Leitungen umfassen, welche wie zuvor beschrieben ausgebildet sind. Beispielsweise können die Kontaktierungseinrichtungen zumindest teilweise mittels MID-Technik, beispielsweise unter Verwendung eines Metallisierungsverfahrens, ausgebildet sein. Das Einbinden von Kontaktierungseinrichtungen hat ebenfalls die im Zusammenhang mit den elektrischen Leitungen erläuterten Vorteile.

Im Rahmen einer weiteren Ausführungsform des Kunststoffgehäuses sind die mindestens zwei elektrischen Kontaktierungseinrichtungen an und/oder in derjenigen Seite des Kunststoffgehäuses angeordnet, welche dem mindestens einen zur Wärmeableitung vorgesehener Abschnitt des Kunststoffgehäuses gegenüber liegt. So kann die herzustellende Batterieanordnung vorteilhafterweise besonders Platzsparend verbaut werden.

Im Rahmen einer weiteren Ausführungsform des Kunststoffgehäuses weist das Kunststoffgehäuse mindestens einen Wärmeleitkleber und/oder eine Wärmeleitfolie auf, welche/r zwischen dem mindestens einen zur Wärmeableitung vorgesehene Abschnitt und mindestens einer galvanischen Zelle, insbesondere angrenzend, anordbar oder angeordnet ist. So kann vorteilhafterweise die Wärmeableitung verbessert werden. Da der Wärmeleitkleber beziehungsweise die Wärmeleitfolie im Wesentlichen zum Toleranzausgleich und nicht zur elektrischen Isolation eingesetzt wird kann diese/r sehr dünn ausgebildet sein, so dass das das Gesamtgewicht der Anordnung nicht Wesentlich erhöht wird.

Ferner kann das Kunststoffgehäuse mindestens einen weiteren Gehäuseabschnitt aufweisen, welcher aus einem Kunststoff beziehungsweise Kunststoffcompound ausgebildet ist, welcher kein Additiv zur Erhöhung der elektrischen Leitfähigkeit umfasst. So kann das Gewicht und die Kosten des Kunststoffgehäuses vorteilhafterweise optimiert, insbesondere verringert, werden.

Im Rahmen einer weiteren des Kunststoffgehäuses Ausführungsform ist das Kunststoffgehäuse zur Aufnahme von zwei oder mehr galvanischen Zellen ausgebildet.

Hinsichtlich weiterer Vorteile und Merkmale des Kunststoffgehäuses wird hiermit explizit auf die Erläuterungen im Zusammenhang mit der Temperierplatte, der erfindungsgemäßen Batterieanordnung und der Figurenbeschreibung verwiesen.

Möglich ist eine Batterieanordnung, insbesondere Batterie oder Batteriemodul, welche eine Temperierplatte und/oder ein Kunststoffgehäuse und eine oder mehrere galvanische Zellen, insbesondere Lithium-Zellen, beispielsweise Lithium-lonen-Zellen" umfasst.

Unter einer Batterie, werden im Sinn der vorliegenden Erfindung nicht nur primäre Batterien, welche auch umgangssprachlich als Batterie bezeichnet werden, sondern insbesondere sekundäre Batterien, welche umgangssprachlich als Akkumulatoren bezeichnet werden, verstanden.

Vorzugsweise ist die Batterieanordnung ein Batteriemodul, welches beispielsweise von ≥ 4 bits ≤ 12, zum Beispiel von ≥ 6 bis ≤ 8, galvanischen Zellen, umfasst. Dies hat den Vorteil, dass das Batteriemodul individuell mit anderen Batteriemodule zusammengestellt und an den zur Verfügung stehenden Raum angepasst angeordnet werden kann, was beim Einsatz von einer gemeinsamen Kühlplatte für ein ganzes Batteriepack aus mehreren Batteriemodulen nicht möglicht ist.

Die galvanischen Zellen können gegebenenfalls eine metallische Zellhülle, beispielsweise aus Aluminium, aufweisen.

Hinsichtlich weiterer Vorteile und Merkmale der Batterieanordnung wird hiermit explizit auf die Erläuterungen im Zusammenhang mit der Temperierplatte, dem erfindungsgemäßen Kunststoffgehäuse und der Figurenbeschreibung verwiesen.

### Zeichnungen und Beispiele

Weitere Vorteile und vorteilhafte Ausgestaltungen der erfindungsgemäßen Gegenstände werden durch die Zeichnungen veranschaulicht und in der nachfolgenden Beschreibung erläutert. Dabei ist zu beachten, dass die Zeichnungen nur beschreibenden Charakter haben und nicht dazu gedacht sind, die Erfindung in irgendeiner Form einzuschränken. Es zeigen
- Fig. 1: einen schematischen Querschnitt durch eine Ausführungsform einer erfindungsgemäßen Temperierplatte;
- Fig. 2a: einen schematischen Querschnitt durch eine Ausführungsform eines Kunststoffgehäuses; und
- Fig. 2b: einen schematischen Querschnitt durch eine andere Ausführungsform eines Kunststoffgehäuses.;

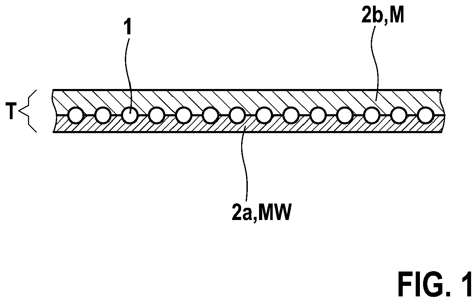

Figur 1 zeigte eine Ausführungsform einer erfindungsgemäßen Temperierplatte T zur Temperierung von einer oder mehreren galvanischen Zellen Z, insbesondere eine Lithium-Zellen, beispielsweise eine Lithium-Ionen-Zellen, zum Beispiel mit einer metallischen Hülle. Figur 1 zeigt, dass die Temperierplatte T mehrere Temperiermittelkanäle 1 zum Führen eines Temperiermittels durch die Temperierplatte T umfasst. Figur 1 veranschaulicht, dass die Temperierplatte T dabei ein Abschnitt 2a aufweist, welcher zur Wärmeableitung vorgesehen ist und die Temperiermittelkanäle 1 teilweise begrenzt. Erfindungsgemäß ist dieser Abschnitt aus einem Kunststoffcompound MW ausgebildet, welcher mindestens ein Additiv zur Erhöhung der Wärmeleitfähigkeit umfasst.

Figur 1 illustriert, dass die Temperiermittelkanäle 1 durch einen weiteren Abschnitt 2b der Temperierplatte T teilweise begrenzt sind, welcher aus einem oder mehreren anderen Materialien M, beispielsweise einem oder mehreren Kunststoffen, Kunststoffcompounds und/oder Kunststoff-Metall-Verbundwerkstoffen, ausgebildet ist. Vorzugsweise ist der weitere Abschnitt 2b aus einem oder mehreren Kunststoffen beziehungsweise Kunststoffcompounds beziehungsweise Kunststoff-Metallwerkstoffen M ausgebildet, welche kein Additiv zur Erhöhung der Wärmeleitfähigkeit umfassen. So können vorteilhafterweise die Kosten und das Gewicht der Temperierplatte T optimiert werden.

Figur 1 zeigt insbesondere, dass die Temperiermittelkanäle 1 durch zwei zusammengesetzte, strukturierte Halbschalen 2a, 2b ausgebildet sind, von denen die eine Halbschale 2a den wärmeleitfähigkeitsadditivierten Kunststoffcompound MW und die andere Halbschale 2b den nicht wärmeleitfähigkeitsadditivierten Kunststoffcompound M aufweist.

Die geschwungenen seitlichen Begrenzungslinien zeigen, dass die erfindungsgemäße Temperierplatte T dazu ausgelegt sein kann, mehrere galvanische Zellen Z, beispielsweise die Zellen eines Batteriepacks, zum Beispiel vier bis zwölf Zellen, gleichzeitig zu temperieren.

Die in Figur 1 gezeigte Ausführungsform kann weiterhin insbesondere eine oder mehrere elektrische Leitungen, Zellüberwachungseinrichtungen, Kontaktierungseinrichtungen, Temperiermitteleinleitungsanschlüsse und/oder Temperiermittelableitungsanschlüsse umfassen, welche im Allgemeinen Teil beschrieben, jedoch aus Gründen der Übersichtlichkeit nicht in Figur 1 nicht dargestellt sind.

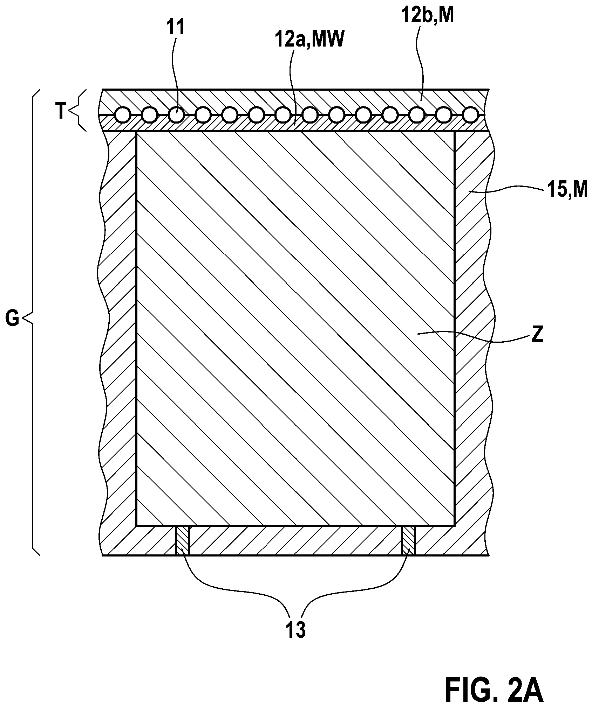

Figur 2a zeigt, dass das Kunststoffgehäuse G für eine oder mehrere galvanische Zellen Z, beispielsweise mit einer metallischen Zellhülle, im Rahmen dieser Ausführungsform einen zur Wärmeableitung vorgesehener Abschnitt 12a aufweist, welcher aus einem, mindestens ein Additiv zur Erhöhung der Wärmeleitfähigkeit umfassenden Kunststoffcompound MW ausgebildet ist. Figur 1 veranschaulicht, dass der zur Wärmeableitung vorgesehener Abschnitt 12a Teil eines, insbesondere plattenförmigen, Deckels des Kunststoffgehäuses G ist. Insbesondere kann eine erfindungsgemäße Temperierplatte T als Deckel eingesetzt werden.

Figur 1 illustriert, dass der zur Wärmeableitung vorgesehene Abschnitt 12a gemeinsam mit Abschnitt 12b Bestandteil eines temperiermediumführenden Bauteils, insbesondere einer als Gehäusedeckel fungierenden Temperierplatte T, ist welche/s durch die Abschnitte 12a und 12b begrenzte Temperiermittelkanälen 11 aufweist. Der zur Wärmeableitung vorgesehener Abschnitt 12a und der Abschnitt 12b, welcher aus einem Kunststoff beziehungsweise Kunststoffcompound M ausgebildet ist, welcher kein Additiv zur Verbesserung der Wärmeleitfähigkeit umfasst, sind dabei als Halbschalen ausgebildet, welche gemeinsam die Temperiermittelkanäle 11 ausbilden und begrenzen.

Figur 2a zeigt zudem, dass das Kunststoffgehäuse G, insbesondere der Gehäusegrundkörper, weiterhin zwei elektrische Kontaktierungseinrichtungen 13 zur elektrischen Kontaktierung einer oder mehrerer in dem Kunststoffgehäuse G angeordneten galvanischen Zellen Z umfasst, welche an und/oder in derjenigen Seite des Kunststoffgehäuses G angeordnet sind, welche dem zur Wärmeableitung vorgesehenen Abschnitt 12a des Kunststoffgehäuses gegenüber liegt.

Figur 2a zeigt, dass das Kunststoffgehäuse neben dem zuvor beschriebenen Gehäusedeckel einen Gehäusegrundkörper, aufweist. Um das Gewicht und die Kosten für das Kunststoffgehäuse G zu optimieren kann der Gehäusegrundkörper Abschnitte 15 aufweisen, welche aus einem Kunststoff beziehungsweise Kunststoffcompound M ausgebildet sind, welcher kein Additiv zur Erhöhung der Wärmeleitfähigkeit umfasst.

Die geschwungenen seitlichen Begrenzungslinien zeigen, dass das Kunststoffgehäuse G weitere Kompartimente für galvanische Zellen Z aufweisen kann, welche analog zu dem gezeigten Kompartiment ausgebildet sind.

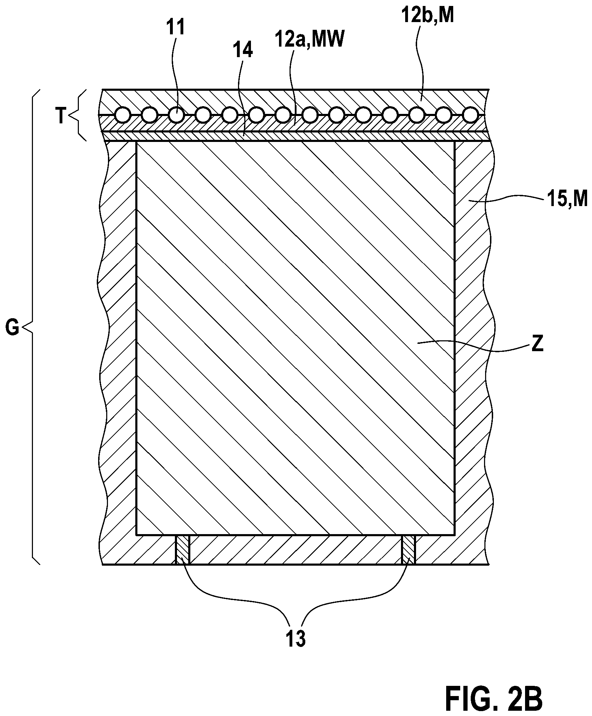

Die in Figur 2b gezeigte Ausführungsform unterscheidet sich im Wesentlichen von der in Figur 2a gezeigten Ausführungsform dadurch, dass das Kunststoffgehäuse einen Wärmeleitkleber beziehungsweise eine Wärmeleitfolie 14 umfasst, welche/r zwischen dem zur Wärmeableitung vorgesehene Abschnitt 12a des Kunststoffgehäuses G und der galvanischen Zelle Z angrenzend angeordnet ist.

Die in den Figuren 2a und 2b gezeigten Ausführungsformen können weiterhin insbesondere eine oder mehrere elektrische Leitungen, Zellüberwachungseinrichtungen, Temperiermitteleinleitungsanschlüsse und/oder Temperiermittelableitungsanschlüsse umfassen, welche im Allgemeinen Teil beschrieben, jedoch aus Gründen der Übersichtlichkeit nicht in den Figuren 2a und 2b nicht dargestellt sind.

## Patentansprüche

1. Anordnung umfassend eine Temperierplatte (T) und eine oder mehrere galvanische Zellen (Z), insbesondere Lithium-Zellen, beispielsweise Lithium-Ionen-Zellen, zum Beispiel mit einer metallischen Hülle, wobei die Temperierplatte (T) zur Temperierung der einen oder der mehreren galvanischen Zellen (Z) mindestens einen Temperiermittelkanal (1) zum Führen eines Temperiermittels durch die Temperierplatte (T) umfasst, und wobei mindestens ein Abschnitt (2a) der Temperierplatte (T), welcher zur Wärmeableitung vorgesehen ist und den mindestens einen Temperiermittelkanal (1) zumindest teilweise begrenzt, aus einem Kunststoffcompound (MW) ausgebildet ist, welches mindestens ein Additiv zur Erhöhung der Wärmeleitfähigkeit umfasst, und wobei der mindestens eine Temperiermittelkanal (1) durch mindestens einen weiteren Abschnitt (2b) der Temperierplatte (T) teilweise begrenzt ist, **dadurch gekennzeichnet, dass** der weitere Abschnitt (2b) aus einem Kunststoff beziehungsweise Kunststoffcompound (M) ausgebildet ist, welcher kein Additiv zur Erhöhung der Wärmeleitfähigkeit umfasst.

2. Anordnung nach Anspruch 1, wobei die Temperierplatte (T) zur Temperierung von zwei oder mehr galvanischen Zellen (Z), insbesondere den galvanischen Zellen (Z) eines Batteriemoduls, beispielsweise von ≥ 4 bis ≤ 12, zum Beispiel von ≥ 6 bis ≤ 8, galvanischen Zellen (Z), ausgelegt ist.

3. Anordnung nach Anspruch 1, wobei der mindestens eine Temperiermittelkanal (1) durch zwei zusammengesetzte Halbschalen (2a, 2b) ausgebildet ist, wobei die eine Halbschale (2a) einen Kunststoffcompound (MW) aufweist, welcher mindestens ein Additiv zur Erhöhung der Wärmeleitfähigkeit umfasst, insbesondere wobei die andere Halbschale (2b) kein Additiv zur Erhöhung der Wärmeleitfähigkeit umfasst.

4. Anordnung nach einem der Ansprüche 1 bis 3, wobei die Temperierplatte (T) durch ein Spritzgussverfahren und/oder ein Extrusionsverfahren und/oder ein Tiefziehverfahren hergestellt ist.

5. Anordnung nach einem der Ansprüche 1 bis 4, wobei die Temperierplatte (T) mindestens eine elektrische Leitung, insbesondere in Form eines zur elektrischen Leitung vorgesehenen Temperierplattenabschnitts, umfasst, welche aus einem elektrisch selbstleitenden Polymer oder Polymergemisch und/oder einem mindestens ein Additiv zur Erhöhung der elektrischen Leitfähigkeit umfassenden Kunststoffcompound und/oder einem metallhaltigen Material ausgebildet ist.

6. Anordnung nach Anspruch 5, wobei die mindestens eine elektrische Leitung durch Einspritzen des elektrisch selbstleitenden Polymers oder Polymergemischs und/oder des Kunststoffcompounds, welcher mindestens ein Additiv zur Erhöhung der elektrischen Leitfähigkeit umfasst, und/oder des metallhaltigen Materials in ein anderes Material oder mehrere andere Materialien der Temperierplatte (T) ausgebildet ist.

7. Anordnung nach einem der Ansprüche 1 bis 6, wobei die Temperierplatte (T) mindestens eine elektrische Leitung umfasst, welche durch Umspritzen eines metallischen Leitungselementes, beispielsweise eines Drahtes oder Gitters, mit einem anderen Material oder mehreren anderen Materialien der Temperierplatte (T) ausgebildet ist.

8. Anordnung nach einem der Ansprüche 1 bis 7, wobei die Temperierplatte (T)
- mindestens eine elektrische Zellüberwachungseinrichtung zur Überwachung des Lade- und/oder Betriebszustandes von einer oder mehreren galvanischen Zellen, und/oder
- mindestens zwei elektrische Kontaktierungseinrichtungen (4) zur elektrischen Kontaktierung von einer oder mehreren galvanischen Zellen (Z),
umfasst.

9. Kunststoffgehäuse (G) für eine oder mehrere galvanische Zellen (Z), insbesondere Lithium-Zellen, beispielsweise Lithium-Ionen-Zellen, wobei mindestens ein zur Wärmeableitung vorgesehener Abschnitt (12a) des Kunststoffgehäuses (G) aus einem Kunststoffcompound (MW) ausgebildet ist, welcher mindestens ein Additiv zur Erhöhung der Wärmeleitfähigkeit umfasst, wobei der mindestens eine zur Wärmeableitung vorgesehene Abschnitt (2a) Teil eines, insbesondere plattenförmigen, Deckels des Kunststoffgehäuses (G) und in Form einer Temperierplatte (T) nach einem der Ansprüche 1 bis 8 ausgeführt ist.

10. Kunststoffgehäuse (G) nach Anspruch 9, wobei das Kunststoffgehäuse (G) zur Aufnahme von zwei oder mehr galvanischen Zellen (Z), insbesondere der galvanischen Zellen (Z) eines Batteriemoduls, beispielsweise von ≥ 4 bis ≤ 12, zum Beispiel von ≥ 6 bis ≤ 8, galvanischen Zellen (Z), ausgelegt ist.

11. Kunststoffgehäuse (G) nach einem der Ansprüche 9 bis 10, wobei das Kunststoffgehäuse (G) durch ein Spritzgussverfahren und/oder ein Extrusionsverfahren und/oder ein Tiefziehverfahren hergestellt ist.

12. Kunststoffgehäuse (G) nach einem der Ansprüche 9 bis 11, wobei das Kunststoffgehäuse mindestens eine elektrische Leitung, insbesondere in Form eines zur elektrischen Leitung vorgesehenen Gehäuseabschnitts, umfasst, welche aus einem elektrisch selbstleitenden Polymer oder Polymergemisch und/oder einem mindestens ein Additiv zur Erhöhung der elektrischen Leitfähigkeit umfassenden Kunststoffcompound und/oder einem metallhaltigen Material ausgebildet ist.

13. Kunststoffgehäuse (G) nach Anspruch 12, wobei die mindestens eine elektrische Leitung durch Einspritzen des elektrisch selbstleitenden Polymers oder Polymergemischs und/oder des Kunststoffcompounds, welcher mindestens ein Additiv zur Erhöhung der elektrischen Leitfähigkeit umfasst, und/oder des metallhaltigen Materials in ein anderes Material oder mehrere andere Materialien des Kunststoffgehäuses (G) ausgebildet ist.

14. Kunststoffgehäuse (G) nach einem der Ansprüche 9 bis 13, wobei das Kunststoffgehäuse mindestens eine elektrische Leitung umfasst, welche durch Umspritzen eines metallischen Leitungselementes, beispielsweise eines Drahtes oder Gitters, mit einem anderen Material oder mehreren anderen Materialien des Kunststoffgehäuses (G) ausgebildet ist.

15. Kunststoffgehäuse (G) nach einem der Ansprüche 9 bis 14, wobei das Kunststoffgehäuse (G)
- mindestens eine elektrische Zellüberwachungseinrichtung zur Überwachung des Lade- und/oder Betriebszustandes von einer oder mehreren galvanischen Zellen (Z), und/oder
- mindestens zwei elektrische Kontaktierungseinrichtungen (13) zur elektrischen Kontaktierung von einer oder mehreren in dem Kunststoffgehäuse (G) angeordneten galvanischen Zellen (Z),
umfasst.

16. Kunststoffgehäuse (G) nach Anspruch 15, wobei die mindestens zwei elektrischen Kontaktierungseinrichtungen (13) an und/oder in derjenigen Seite des Kunststoffgehäuses (G) angeordnet sind, welche dem mindestens einen zur Wärmeableitung vorgesehener Abschnitt (12a) des Kunststoffgehäuses (G) gegenüber liegt.

17. Kunststoffgehäuse (G) nach einem der Ansprüche 9 bis 16, wobei das Kunststoffgehäuse mindestens einen Wärmeleitkleber und/oder eine Wärmeleitfolie (14) umfasst, welche/r zwischen dem mindestens einen zur Wärmeableitung vorgesehene Abschnitt (12a) und mindestens einer galvanischen Zelle (Z), insbesondere angrenzend, anordbar oder angeordnet ist.

## Claims

1. Arrangement comprising a temperature-controlling plate (T) and one or a plurality of galvanic cells (Z), in particular lithium cells, for example lithium-ion cells, for example with a metallic shell, wherein the temperature-controlling plate (T) for controlling the temperature of the one or of the plurality of galvanic cells (Z) comprises at least one temperature-controlling medium channel (1) for guiding a temperature-controlling medium through the temperature-controlling plate (T), and wherein at least one portion (2a) of the temperature-controlling plate (T), which is provided for heat dissipation and which at least partially delimits the at least one temperature-controlling medium channel (1), is formed from a plastics compound (MW) which comprises at least one additive for increasing the thermal conductivity, and wherein the at least one temperature-controlling medium channel (1) is partially delimited by at least one further portion (2b) of the temperature-controlling plate (T), **characterized in that** the further portion (2b) is formed from a plastic or plastics compound (M) which does not comprise an additive for increasing the thermal conductivity.

2. Arrangement according to Claim 1, wherein the temperature-controlling plate (T) is configured for controlling the temperature of two or more galvanic cells (Z), in particular the galvanic cells (Z) of a battery module, for example of ≥ 4 to ≤ 12, for example of ≥ 6 to ≤ 8, galvanic cells (Z).

3. Arrangement according to Claim 1, wherein the at least one temperature-controlling medium channel (1) is formed by two assembled half-shells (2a, 2b), wherein one half-shell (2a) comprises a plastics compound (MW) which comprises at least one additive for increasing the thermal conductivity, in particular wherein the other half-shell (2b) does not comprise an additive for increasing the thermal conductivity.

4. Arrangement according to one of Claims 1 to 3, wherein the temperature-controlling plate (T) is produced by an injection moulding process and/or an extrusion process and/or a deep-drawing process.

5. Arrangement according to one of Claims 1 to 4, wherein the temperature-controlling plate (T) comprises at least one electrical line, in particular in the form of a temperature-controlling plate portion which is provided for the electrical conduction, which is formed from an electrically self-conducting polymer or polymer mixture and/or a plastics compound comprising at least one additive for increasing the electrical conductivity and/or a metal-containing material.

6. Arrangement according to Claim 5, wherein the at least one electrical line is formed by injecting the electrically self-conducting polymer or polymer mixture and/or the plastics compound which comprises at least one additive for increasing the electrical conductivity and/or the metal-containing material into another material or a plurality of other materials of the temperature-controlling plate (T).

7. Arrangement according to one of Claims 1 to 6, wherein the temperature-controlling plate (T) comprises at least one electrical line which is formed by encapsulating a metallic line element, for example a wire or mesh, by injection moulding with another material or a plurality of other materials of the temperature-controlling plate (T).

8. Arrangement according to one of Claims 1 to 7, wherein the temperature-controlling plate (T) comprises
- at least one electrical cell monitoring device for monitoring the state of charge and/or operating state of one or a plurality of galvanic cells, and/or
- at least two electrical contacting devices (4) for electrically contacting one or a plurality of galvanic cells (Z).

9. Plastics housing (G) for one or a plurality of galvanic cells (Z), in particular lithium cells, for example lithium-ion cells, wherein at least one portion (12a) of the plastics housing (G) which is provided for heat dissipation is formed from a plastics compound (MW) which comprises at least one additive for increasing the thermal conductivity, wherein the at least one portion (2a) which is provided for heat dissipation is part of an, in particular plate-shaped, cover of the plastics housing (G), and is configured in the form of a temperature-controlling plate (T) according to one of Claims 1 to 8.

10. Plastics housing (G) according to Claim 9, wherein the plastics housing (G) is configured for accommodating two or more galvanic cells (Z), in particular the galvanic cells (Z) of a battery module, for example ≥ 4 to ≤ 12, for example ≥ 6 to ≤ 8, galvanic cells (Z).

11. Plastics housing (G) according to either of Claims 9 and 10, wherein the plastics housing (G) is produced by an injection moulding process and/or an extrusion process and/or a deep-drawing process.

12. Plastics housing (G) according to one of Claims 9 to 11, wherein the plastics housing comprises at least one electrical line, in particular in the form of a housing portion provided for the electrical conduction, which is formed from an electrically self-conducting polymer or polymer mixture and/or a plastics compound comprising at least one additive for increasing the electrical conductivity and/or a metal-containing material.

13. Plastics housing (G) according to Claim 12, wherein the at least one electrical line is formed by injecting the electrically self-conducting polymer or polymer mixture and/or the plastics compound which comprises at least one additive for increasing the electrical conductivity and/or the metal-containing material into another material or a plurality of other materials of the plastics housing (G).

14. Plastics housing (G) according to one of Claims 9 to 13, wherein the plastics housing comprises at least one electrical line which is formed by encapsulating a metallic line element, for example a wire or mesh, by injection moulding with another material or a plurality of other materials of the plastics housing (G).

15. Plastics housing (G) according to one of Claims 9 to 14, wherein the plastics housing (G) comprises
- at least one electrical cell monitoring device for monitoring the state of charge and/or operating state of one or a plurality of galvanic cells (Z), and/or
- at least two electrical contacting devices (13) for electrically contacting one or a plurality of galvanic cells (Z) arranged in the plastics housing (G).

16. Plastics housing (G) according to Claim 15, wherein the at least two electrical contacting devices (13) are arranged on and/or in that side of the plastics housing (G) which lies opposite to the at least one portion (12a) of the plastics housing (G) which is provided for heat dissipation.

17. Plastics housing (G) according to one of Claims 9 to 16, wherein the plastics housing comprises at least one thermally conductive adhesive and/or one thermally conductive foil (14) which is or can be arranged, in particular adjacently, between the at least one portion (12a) which is provided for heat dissipation and at least one galvanic cell (Z).

## Revendications

1. Arrangement comprenant une plaque d'équilibrage de température (T) et une ou plusieurs cellules galvaniques (Z), notamment des cellules au lithium, par exemple des cellules aux ions de lithium, par exemple comprenant une enveloppe métallique, la plaque d'équilibrage de température (T), pour réaliser l'équilibrage de température de l'une ou des plusieurs cellules galvaniques (Z), comportant au moins un canal à fluide d'équilibrage de température (1) servant à passage d'un fluide d'équilibrage de température à travers la plaque d'équilibrage de température (T), et au moins une portion (2a) de la plaque d'équilibrage de température (T), laquelle est conçue pour la dissipation de chaleur et délimite au moins partiellement l'au moins un canal à fluide d'équilibrage de température (1), est constituée d'un composé de matière plastique (MW) qui comporte au moins un additif destiné à augmenter la conductivité thermique, et l'au moins un canal à fluide d'équilibrage de température (1) étant partiellement délimité par au moins une portion supplémentaire (2b) de la plaque d'équilibrage de température (T), **caractérisé en ce que** la portion supplémentaire (2b) est constituée d'une matière plastique ou d'un composé de matière plastique (M) qui comprend un additif pour augmenter la conductivité thermique.

2. Arrangement selon la revendication 1, la plaque d'équilibrage de température (T) étant conçue pour réaliser l'équilibrage de température de deux cellules galvaniques (Z) ou plus, notamment des cellules galvaniques (Z) d'un module de batterie, par exemple de ≥ 4 à ≤ 12, par exemple de ≥ 6 à ≤ 8 cellules galvaniques (Z).

3. Arrangement selon la revendication 1, l'au moins un canal à fluide d'équilibrage de température (1) étant formé par deux demi-coques (2a, 2b) assemblées, l'une des demi-coques (2a) possédant un composé de matière plastique (MW) qui comporte au moins un additif destiné à augmenter la conductivité thermique, l'autre demi-coque (2b) ne comportant notamment aucun additif destiné à augmenter la conductivité thermique.

4. Arrangement selon l'une des revendications 1 à 3, la plaque d'équilibrage de température (T) étant fabriquée par un procédé de moulage par injection et/ou un procédé d'extrusion et/ou un procédé d'emboutissage.

5. Arrangement selon l'une des revendications 1 à 4, la plaque d'équilibrage de température (T) comprenant au moins une ligne électrique, notamment sous la forme d'une portion de plaque d'équilibrage de température prévue pour la conduction électrique, laquelle est constituée d'un polymère ou d'un mélange de polymères électriquement autoconducteur et/ou d'un composé de matière plastique comportant au moins un additif destiné à augmenter la conductivité électrique et/ou d'un matériau contenant du métal.

6. Arrangement selon la revendication 5, l'au moins une ligne électrique étant formée par injection du polymère ou du mélange de polymères électriquement autoconducteur et/ou du composé de matière plastique comportant au moins un additif destiné à augmenter la conductivité électrique et/ou du matériau contenant du métal dans un autre matériau ou dans plusieurs autres matériaux de la plaque d'équilibrage de température (T).

7. Arrangement selon l'une des revendications 1 à 6, la plaque d'équilibrage de température (T) comprenant au moins une ligne électrique, laquelle est formée par enrobage d'un élément de ligne métallique, par exemple un fil ou une grille, avec un autre matériau ou plusieurs autres matériaux de la plaque d'équilibrage de température (T).

8. Arrangement selon l'une des revendications 1 à 7, la plaque d'équilibrage de température (T) comprenant
- au moins un dispositif électrique de surveillance de cellule destiné à surveiller l'état de charge et/ou de fonctionnement d'une ou de plusieurs cellules galvaniques, et/ou
- au moins deux dispositifs de mise en contact électrique (4) destinés à la mise en contact électrique d'une ou de plusieurs cellules galvaniques (Z).

9. Boîtier en matière plastique (G) pour une ou plusieurs cellules galvaniques (Z), notamment des cellules au lithium, par exemple des cellules aux ions de lithium, au moins une portion (12a) du boîtier en matière plastique (G) destinée à la dissipation de chaleur étant constituée d'un composé de matière plastique (MW) qui comporte au moins un additif destiné à augmenter la conductivité thermique, l'au moins une portion (2a) destinée à la dissipation de chaleur faisant partie d'un couvercle, notamment en forme de plaque, du boîtier en matière plastique (G) et étant réalisée sous la forme d'une plaque d'équilibrage de température (T) selon l'une des revendications 1 à 8.

10. Boîtier en matière plastique (G) selon la revendication 9, le boîtier en matière plastique (G) étant conçu pour accueillir deux cellules galvaniques (Z) ou plus, notamment des cellules galvaniques (Z) d'un module de batterie, par exemple de ≥ 4 à ≤ 12, par exemple de ≥ 6 à ≤ 8 cellules galvaniques (Z).

11. Boîtier en matière plastique (G) selon l'une des revendications 9 à 10, le boîtier en matière plastique (G) étant fabriqué par un procédé de moulage par injection et/ou un procédé d'extrusion et/ou un procédé d'emboutissage.

12. Boîtier en matière plastique (G) selon l'une des revendications 9 à 11, le boîtier en matière plastique comprenant au moins une ligne électrique, notamment sous la forme d'une portion de plaque d'équilibrage de température prévue pour la conduction électrique, laquelle est constituée d'un polymère ou d'un mélange de polymères électriquement autoconducteur et/ou d'un composé de matière plastique comportant au moins un additif destiné à augmenter la conductivité électrique et/ou d'un matériau contenant du métal.

13. Boîtier en matière plastique (G) selon la revendication 12, l'au moins une ligne électrique étant formée par injection du polymère ou du mélange de polymères électriquement autoconducteur et/ou du composé de matière plastique comportant au moins un additif destiné à augmenter la conductivité électrique et/ou du matériau contenant du métal dans un autre matériau ou dans plusieurs autres matériaux du boîtier en matière plastique (G).

14. Boîtier en matière plastique (G) selon l'une des revendications 9 à 13, le boîtier en matière plastique comprenant au moins une ligne électrique, laquelle est formée par enrobage d'un élément de ligne métallique, par exemple un fil ou une grille, avec un autre matériau ou plusieurs autres matériaux du boîtier en matière plastique (G).

15. Boîtier en matière plastique (G) selon l'une des revendications 9 à 14, le boîtier en matière plastique (G) comprenant
- au moins un dispositif électrique de surveillance de cellule destiné à surveiller l'état de charge et/ou de fonctionnement d'une ou de plusieurs cellules galvaniques, et/ou
- au moins deux dispositifs de mise en contact électrique (13) destinés à la mise en contact électrique d'une ou de plusieurs cellules galvaniques (Z) disposées dans le boîtier en matière plastique (G).

16. Boîtier en matière plastique (G) selon la revendication 15, les au moins deux dispositifs de mise en contact électrique (13) étant disposés sur et/ou dans le côté du boîtier en matière plastique (G) qui se trouve à l'opposé de l'au moins une portion (12a) du boîtier en matière plastique (G) destinée à la dissipation de chaleur.

17. Boîtier en matière plastique (G) selon l'une des revendications 9 à 16, le boîtier en matière plastique (G) comprenant au moins une étiquette autocollante thermoconductrice et/ou un film thermoconducteur (14) qui peut être disposé (e) ou est disposé(e) entre l'au moins une portion (12a) destinée à la dissipation de chaleur et au moins une cellule galvanique (Z), notamment de manière adjacente.
